# EUROPEAN PATENT APPLICATION

(11) **EP 2 631 316 A1**
(43) Date of publication of application: **28.08.2013**
(21) Application number: 11834409.2
(22) Date of filing: 19.10.2011
(51) Int. Cl.: C22C 45/04

(54) **Ni-BASED AMORPHOUS ALLOY WITH HIGH DUCTILITY, HIGH CORROSION RESISTANCE AND EXCELLENT DELAYED FRACTURE RESISTANCE**

(30) Priority: 20.10.2010 JP 2010235968
(71) Applicant: Nakayama Steel Works, Ltd., Osaka-shi Osaka 551-8551 (JP); Tohoku University, Aoba-ku Sendai-shi Miyagi 980-8577 (JP)
(72) Inventor: KURAHASHI Ryurou, Osaka-shi Osaka 551-8551 (JP); MIMURA Tsunehiro, Osaka-shi Osaka 551-8551 (JP); AMIYA Kenji, Sendai-shi Miyagi 980-8577 (JP); SAOTOME Yasunori, Sendai-shi Miyagi 980-8577 (JP)
(74) Representative: TBK
(86) International application number: PCT/JP2011/074079
(87) International publication number: WO 2012/053570

(57) **Abstract**

[Problem] To prepare an amorphous alloy as an authentic industrial-use material with a wide range of applications by solving various problems such as delayed fracture and ductility.

[Solution] The alloy includes 63 at% or more of Ni and consists only of, as a semimetal for amorphization, other than P. The semimetal may include, for example, 10 to 25 at% of B and one or more of Cr, Mo, and Nb as remaining main elements.

## Description

### [Technical Field]

The invention according to Claims relates to Ni-based amorphous alloy which has high ductility, excellent resistance to delayed fracture caused by hydrogen, and high corrosion resistance, and can be used in large quantities as an industrial material.

### [Background Art]

It has been nearly 50 years since the introduction of amorphous alloys in the world, but they are not used seriously as industrial materials for large-size equipment. The reasons for this are the issue concerning equipment having a high cooling rate when preparing amorphous alloys with a sheet thickness ranging from 300 to 150 microns when used in large-sized equipment and additionally the issue from a physical aspect in that the physical properties (excellent ductility and delayed fracture resistance) with which amorphous alloys can be used as industrial materials are not satisfied. Presently, the inventors tackled the issues of physical properties and solved them.

Fe-based amorphous alloys such as the Fe-Cr series and the Fe-Cr-Mo series have excellent corrosion resistance. Thus, they have been studied for many years and numerous reports and patents are available. A representative one is the Fe-Cr-Mo-P series disclosed in Japanese Patent No. 3805601. As a semimetal for amorphization, P [See the Report: Koji Hashimoto, Amorphous Stainless, Journal of the Japan Institute of Metals and Materials, Vol. 8, No. 5 (1979)] which is useful for the formation of a passive state with high corrosion resistant is primarily used. The forms are primarily P-C and P-B. Further with combinations of 25 at% or more of Cr content and 7 at% or more of Mo, excellent high corrosion resistance is exhibited showing nearly zero corrosion even in the immersion test at room temperature in aqua regia for a period of one month (see Japanese Unexamined Patent Application Publication No. 2009-270152).
The amorphous alloy in this partial component system has already been commercialized. The product has been used as a coating on the surface of the pump shaft for carrying acids (hydrochloric acid, hydrofluoric acid, and phosphoric acid) at chemical plants for chemical agents. The performance thereof is greater by 5 times or more than that of hastelloy alloys in terms of resistance both to corrosion and abrasion. Currently, this is in an operation using an actual machine. However, there is a problem in the preparation of an amorphous alloy coating in these component systems and in the subsequent coating. The contents and measures are as follows.

### - The aforementioned Fe-based amorphous alloys have a low ductility.

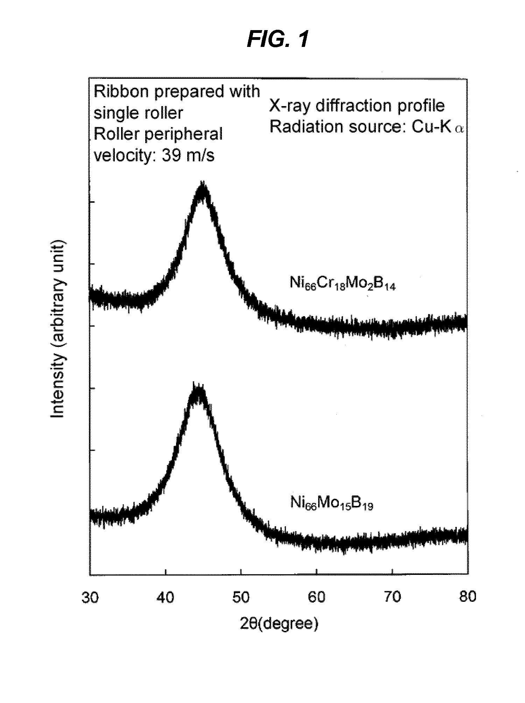

A adhesion bending (180 degrees) test of a ribbon was performed for evaluation of ductility and an amorphous ribbon for obtaining the ductility performance index was prepared as follows. For each amorphous alloy component, a mixture of pure metals and semimetals was dissolved by high frequency heating under an Ar atmosphere and cast in a Cu mold to obtain a mother alloy. This mother alloy was dissolved again by high frequency heating under an Ar atmosphere and blown over a single roller to obtain an amorphous ribbon. The formation of the amorphous alloy was confirmed by halo peaks by X-ray diffraction (See Fig. 1). The thickness of the amorphous ribbon was adjusted to 30 microns and 60 microns by changing the number of rotations of the single roller. An adhesion bending (180 degrees) test of the ribbon was performed and the performance index for ductility was measured based on the presence/absence of fracture of the ribbon. The performance index was expressed as follows:
Index 4: No fracture with adhesion bending (180 degrees) at a thickness of 30 or 60 microns
Index 3: No fracture at a thickness of 30 microns, but 50% fracture at a thickness of 60 microns
Index 2: No fracture at a thickness of 30 microns, but fracture at a thickness of 60 microns
Index 1: Fractures both at a thickness of 30 microns and 60 microns.
In the amorphous alloy of the aforementioned Fe-Cr-Mo series, even with the composition of 70Fe-10Cr-13P-7C which is known to have ductility, the ductility performance index was 2 indicating poor ductility. Alternatively, as the amount of Cr is increased for the improvement of corrosion resistance, the ductilitybecomes poorer. For this reason, if the difference in the coefficient -6 of linear expansion from the substrate is 3 x 10 or more when preparing a coating, in order to eliminate the temperature difference as much as possible between the substrate and the coating and between the time of preparing the coating and after preparing the same, it is necessary to control the cooling speed to about 15 degrees/min. until reaching room temperature. Otherwise, due to the difference in the coefficient of linear expansion, stress acts rapidly on the coating, so that cracks occur easily on the coating. Furthermore, in order to reduce such a phenomenon, it is also necessary to insert a cushioning alloy material between the substrate and the amorphous coating alloy. As a result, the stress of the linear expansion difference due to temperature can be reduced by the cushioning alloy material, so that a satisfactory coating can be formed. In this case, the results of the ductility of the amorphous alloys according to the present invention are shown in Table 1.

### - Occurrence of delayed fracture

In the aforementioned Fe-Cr-Mo-based amorphous alloy, a semimetal "P" is used for amorphization and for the improvement in corrosion resistance. Due to hydrogen absorption by "P", fracture of the coating occurs after a while. This suspended the sales of the products by Allied Chemical Corporation, USA, in 1971 (See, Ken Masumoto, Flow of the Study of Amorphous Metals, Materia Japan Vol. 37 No. 5 (1998)). The aforementioned amorphous coatings in the pump shaft for chemicals have been used in real operation for a period that is slightly shorter than three years as the longest (this life is longer by 5 times compared to the normal alloy). Now, the use period is considered to be three years or less. Now, as industrial materials, the durations of excellent anti-corrosive life requested for the amorphous alloy coatings are 10, 30, 50, 100, and 200 years although the duration of life depends upon the positions where the coating is used. The delayed fracture is a fatal defect.

In order to eliminate the aforementioned problem with the Fe-Cr-Mo-based amorphous, the Ni-based amorphous alloys have been studied and many Patent Literatures have been published with evaluating higher corrosion resistance and better ductility.
For example, in the Patent Literatures 1 and 2, corrosion resistance of the Ni-Cr-P-B-based amorphous to dilute hydrochloric acid is reported.
Recently, Patent Literatures 3 and 4 were published. In particular, in the Patent Literature 3, the components as "Ni-based amorphous alloy having high strength and high corrosion resistance" are disclosed in a broad range. Namely, the component disclosed is Ni_{(80-w-x-y)}Nb_{w}CrₓMo_{y}P_{20-z}B_{z} where 0.1 ≤ W ≤ 10, 4 ≤ X ≤ 18, 3 ≤ Y ≤ 12, and 4 ≤ Z ≤ 6.

### [Citation List]

### [Patent Literature]

[PTL 1] Japanese Unexamined Patent Application Publication No. S60-002641
[PTL 2] Japanese Unexamined Patent Application Publication No. S61-243142
[PTL 3] Japanese Unexamined Patent Application Publication No. 2001-049407
[PTL 4] Japanese Unexamined Patent Application Publication No. H8-225901

### [Summary of Invention]

### [Technical Problem]

In the Ni-based amorphous alloys disclosed in many references such as the above, most of semimetals include the combinations of P-B, P-C, and P-Si and also alloys are prepared by changing the aforementioned component ratios. Recently, for fuel cell separators, Ni₈₀₋ₓ-Crₓ-16P-4B are often introduced. In the 1960' s through 1970's, Ni-Cr-B were also introduced.
These Ni-based amorphous alloys use "P", as a semimetal, which causes delayed fracture, for amorphization or the like. Due to a small amount of Ni, ductility is low, so that it is difficult to apply it and it is not spread widely as an industrial material.

Therefore, the present invention provides amorphous alloys as authentic industrial materials in a broad application range which have the following features by solving the problems such as delayed fracture and ductility.
- To have excellent ductility: As for ductility performance index, Index 4 of the 4-step performance index of the aforementioned contents is assumed.
- To have excellent delayed fracture resistance: As a semimetal for amorphization, for example, only "B" is used with consideration of ductility without using "P" which absorbs hydrogen.
- To maintain high corrosion resistance: High Cr of Fe-Cr-Mo base demonstrated high performance corrosion resistance to both reductive environment (hydrochloric acid, sulfuric acid) and oxidative environment (nitric acid, Cl water). In the present invention, measures are made for the two component systems of reductive environment and oxidative environment.
- To have high abrasion resistance: Hardness HV which is the performance index of abrasion resistance ranges from 800 to 1000. In this case, hardness of the Fe-Cr-Mo base ranges from 800 to 1100.

### [Solution to Problem]

The Ni-based amorphous alloy of the present invention is constituted as follows to have the aforementioned features. Namely, the following features are satisfied:

### - Securing high ductility

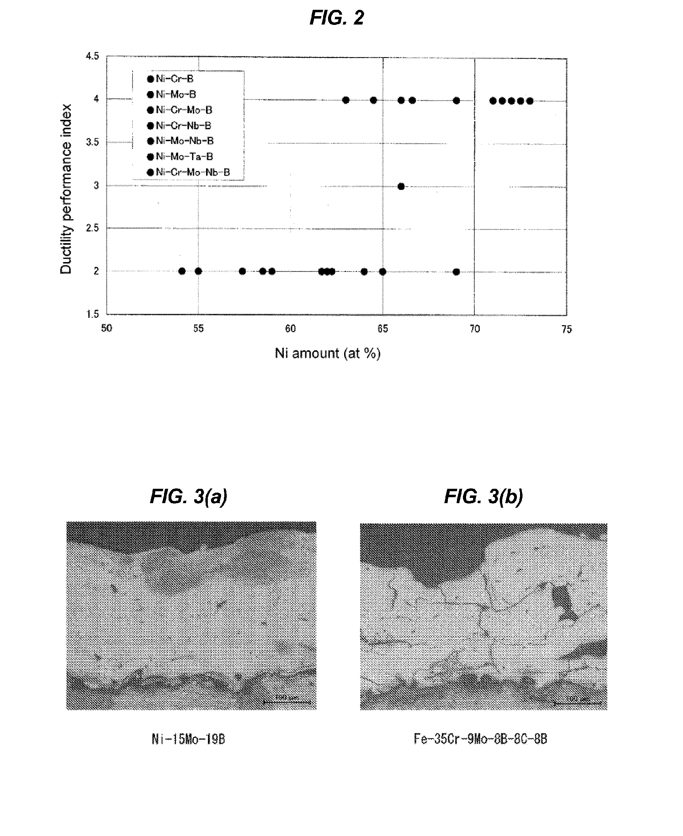

Generally, in the alloys including three or more constituent elements, if the amount used increases relative to the principle element thereof, the ductility is lost. Thus, in the present invention, the amount (at%) of Ni which is the base element is set to be high. Regarding the above, the relationships between the amount (at%) of base substrate Ni and the ductilityperformance index for the multiple component system are shown in Fig. 2. As shown in Fig. 2, in order to achieve the ductility performance index 4, the minimum amount of Ni is 63% (at%) or more although there are slight variations depending on the number of components of alloys and kinds thereof.

### - Excellent delayed fracture resistance

As a semimetal used for amorphization, "P" which induces delayed fracture is not used. In the embodiments, "B" is used as the base semimetal. It should be noted that when P is not present, it is suitable as a material for a cleaning device of an IC substrate which should be extremely cautious about even slight contamination.

### - Securing high corrosion resistance

The present invention focuses on improvement of ductility. Thus, due to a large amount of Ni-base, the number and amount of other elements used are reduced. In turn, for preventing deterioration of performance of corrosion resistance, the optimum constitution is clarified for each component system. In the embodiments, the alloys used besides Ni and B are one or more of Cr, Mo, and Nb. In addition, W, V, Ta, Co and the like can be added, but they cannot be added in a large amount (Amount roughly exceeding either Cr, Mo or Nb. For example, each 2 at% or more) in order to secure ductility. The roles of respective components are as follows:
Mo; It improves corrosion resistance under reductive environment, ductility is lost if it is added in a large amount.
Cr; It improves corrosion resistance under oxidative environment, ductility is lost if it is added in a large amount.
Nb; It exhibits excellent corrosion resistance, and with combination of Mo, corrosion resistance is further improved.

Amorphous alloys in these component systems are as follows:
a) Component systems resistant to hydrochloric acid, sulfuric acid, and hydrofluoric acid under a reductive environment;

   Ni-Mo-B, Ni-Mo-Nb-B
b) Component systems resistant to hydrochloric acid, sulfuric acid, hydrofluoric acid, and hypochlorous acid under a reductive environment;

   Ni-Cr-Mo-B, Ni-Cr-Mo-Nb-B
c) Component systems resistant to nitric acid under an oxidative environment;
Ni-Cr-B. This amorphous alloy is corrosion resistant not only to nitric acid, but also to sulfuric acid and sodium hypochlorite.
All of the aforementioned component systems have corrosion resistance also to phosphoric acid and caustic soda.

### - Maintaining abrasion resistance

If the minimum component amount of the substrate Ni base is specified, the amounts of Cr, Mo, and Nb are restricted from the aspect of corrosion resistance. Therefore, when abrasion resistance is requested, the amount of B is dropped to a minimum of 10% and the amounts of Cr and Mo are increased by the amount corresponding thereto to improve hardness.

The present invention relates to Ni-based amorphous alloys having the compositions described in Claims. If an appropriate amount of Cr, Mo, Nb, and B are added to Ni, the alloy exhibits excellent ductility (e.g., Ductility performance index 4 mentioned above), corrosion resistance, and delayed fracture resistance.
Namely, a Ni-based amorphous alloy of the present invention includes 63 at% or more of Ni and only element (B, C, Si, etc.) other than P as a semimetal for amorphization as mentioned above. The semimetal may include, for example, 10 to 25 at% of B and one or more of Cr, Mo, and Nb as remaining main elements. The following component systems are available as examples of the Ni-based amorphous alloys mentioned above. Note that all of the component systems exhibit excellent corrosion resistance to phosphoric acid and caustic soda.

The amorphous alloy expressed by the component system of Ni_{100-x-y}MoₓB_{y} has ductility, excellent delayed fracture resistance, and excellent corrosion resistance performance to hydrochloric acid, sulfuric acid, and hydrofluoric acid under a reductive environment.
Here, the amount of Ni is 66 at% ≤ Ni and x and y of the alloy are in the range of 5 at% ≤ x ≤ 21 at% and 10 at% ≤ y ≤ 25 at%. As shown in the test results in Table 1 and Table 2, the performance exhibits excellent ductility and excellent corrosion resistance to the aforementioned chemicals. In addition, the alloy has excellent delayed fracture resistance.

The amorphous alloy expressed by the component system of Ni_{100-x-y-z}MoₓNb_{y}B_{z} has ductility, excellent delayed fracture resistance, and excellent corrosion resistance performance to hydrochloric acid, sulfuric acid, hydrofluoric acid, and sodium hypochlorite under a reductive environment.
Here, the amount of Ni is 71.5 at% ≤ Ni and x, y, and z in the formula are in the range of 0.1 at% ≤ x ≤ 15 at%, 0.1 at% ≤ y ≤ 10 at%, and 10 at% ≤ z ≤ 20 at%. As shown in the test results in Table 1 and Table 2, the performance exhibits excellent ductility and excellent corrosion resistance. In addition, the alloy has excellent delayed fracture resistance.

The amorphous alloy expressed by the component system of Ni_{100-x-y-z}CrₓMo_{y}B_{z} has ductility, excellent delayed fracture resistance, and excellent corrosion resistance performance to hydrochloric acid, sulfuric acid, hydrofluoric acid, and sodium hypochlorite under a reductive environment.
Here, the amount of Ni is 64 at% ≤ Ni and x, y and z in the formula are in the range of 10 at% ≤ x ≤ 25 at%, 0 at% ≤ y ≤ 10 at%, and 10 at% ≤ z ≤ 25 at%. As shown in the test results in Table 1 and Table 2, the performance exhibits excellent ductility and excellent corrosion resistance. In addition, the alloy has excellent delayed fracture resistance.

The amorphous alloy expressed by the component system of Ni_{100-w-x-y-z}Cr_{w}MoₓNb_{y}B_{z} has ductility, excellent delayed fracture resistance, and excellent corrosion resistance performance to hydrochloric acid, sulfuric acid, hydrofluoric acid, and sodium hypochlorite under a reductive environment.
Here, the amount of Ni is 64 at% ≤ Ni and w, x, y, and z in the formula are in the range of 0.1 at% ≤ w ≤ 15 at%, 0.1 at% ≤ x ≤ 20 at%, 0.1 at% ≤ y ≤ 10 at%, and 10 at% ≤ z ≤ 25 at%. As shown in the test results in Table 1 and Table 2, the performance exhibits excellent ductility and excellent corrosion resistance. In addition, the alloy has excellent delayed fracture resistance.

The amorphous alloy expressed by the component system of Ni_{100-X-Y}CrₓB_{y} has ductility, excellent delayed fracture resistance, and excellent corrosion resistance to nitric acid, hydrofluoric acid, and sodium hypochlorite under an oxidative environment.
Here, the amount of Ni is 63 at% ≤ Ni and X and Y in the formula are in the range of 20 at% ≤ x ≤ 30 at% and 10 at% ≤ y ≤ 25 at%. As shown in the test results in Table 1 and Table 2, the performance exhibits excellent ductility and excellent corrosion resistance. In addition, the alloy has excellent delayed fracture resistance.

### [Effects of the Invention]

The Ni-based amorphous alloy of the present invention provides comprehensively excellent features such as excellent ductility, delayed fracture resistance, corrosion resistance, and abrasion resistance, and can be developed as an authentic industrial material in a broad application range.

### [Brief Description of Drawings]

[Fig. 1] An X-ray diffraction profile for an amorphous ribbon prepared.
[Fig. 2] A chart showing relationships between the amount (at%) of Ni in the amorphous alloy and the ductility performance index.
[Fig. 3] Cross-sectional micrographs of the substrate and the amorphous alloy coating formed on the surface thereof by thermal spraying. Fig. 3 (a) is a coating of Ni-15Mo-19B, Fig. 3 (b) is a coating of Fe-Cr-Mo series.
[Fig. 4] Fig. 4 (a), (b), and (c) are explanatory charts showing overview of the delayed fraction test.

### [Description of Embodiments]

The Ni-based amorphous alloy according to the present invention can be produced by so-called single roller method or double roller method using one or two cooled rollers. Furthermore, it can be produced by the thermal spraying method using a thermal spraying device with a quenching function.

The inventors prepared a ribbon (metallic film) made of a Ni-based amorphous alloy with a single roller method based on the following procedures. Namely, as for each amorphous alloy shown in Table 1, a mixture of pure metals and semimetals of corresponding components was dissolved by high frequency heating under an Ar atmosphere and cast in a Cu mold to obtain mother alloy. This mother alloy was dissolved again by high frequency heating under an Ar atmosphere and sprayed on the surface of a single roller rotating while cooling from the inside to obtain an amorphous ribbon. The thickness of the amorphous ribbon was adjusted to 30 µm and 60 µm by changing the number of rotations of the aforementioned single roller. The fact that the ribbon is amorphous was confirmed by observing halo peaks by X-ray diffraction (See Fig. 1).

### [Confirmation of Corrosion Resistance]

Regarding each amorphous ribbon prepared as mentioned above, an immersion test in 35% hydrochloric acid and hydrofluoric acid was conducted at room temperature. The changes in weight of the ribbon were observed over time and the corroded thickness was calculated with the weight loss rate in order to evaluate corrosion resistance. The results are shown in Table 1.

**[Table 1]**

| | | | | | | |
|---|---|---|---|---|---|---|
| * Ductility performance index ○: Excellent | | | | | | |
| | □: 50% Cracks | | | | | |
| | ×: 100% Cracks | | | | | |
| * Corrosion resistance test at room temperature | | | | | | |

| Amorphous metal names (Number at%) | | adhesion bending evaluation | | | Corrosion amount (µ/year) | |
|---|---|---|---|---|---|---|
| | | Sheet thickness 60 µm adhesion bending | Sheet thickness 30 µm adhesion bending | Ductility performance index | Hydrochlo ric acid 35% | Hydrofluor ic acid 46% |
| 63Ni-20Cr-17B | | ○ | ○ | 4 | 492 | 141 |
| 59Ni-25Cr-16B | | × | ○ | 2 | 279 | |
| 73Ni-8Mo-19B | | ○ | ○ | 4 | 16 | |
| 71Ni-8Mo-21B | | ○ | ○ | 4 | 9 | |
| 69Ni-8Mo-23B | | ○ | ○ | 4 | 55 | 186 |
| 73Ni-10Mo-17B | | ○ | ○ | 4 | 17 | |
| 69Ni-10Mo-21B | | ○ | ○ | 4 | 27 | 87 |
| 69Ni-12Mo-19B | | ○ | ○ | 4 | 16 | |
| 66Ni-15Mo-19B | | ○ | ○ | 4 | 22 | 164 |
| 65Ni-17.5Mo-17.5B | | × | ○ | 2 | 22 | |
| 62Ni-25Mo-13B | | × | ○ | 2 | 27 | 179 |
| 62.25Ni-7.5Cr-13.75Mo-16.5B | | × | ○ | 2 | 48 | |
| 64.5Ni-10Cr-7.5Mo-18B | | ○ | ○ | 4 | 11 | 100 |
| 58.5Ni-15Cr-12.5Mo-14B | | ○ | ○ | 2 | 34 | 172 |
| 57.4Ni-20Cr-8.3Mo-14.3B | | × | ○ | 2 | 59 | |
| 71Ni-10Cr-14B-5Nb | | ○ | ○ | 4 | 449 | 56 |
| 72.5Ni-7.5Mo-15B-5Nb | | ○ | ○ | 4 | 27 | 87 |
| 71.5Ni-10Mo-13.5B-5Nb | | ○ | ○ | 4 | 18 | 188 |
| 66.6Ni-8Cr-8Mo-15.4B-2Nb | | ○ | ○ | 4 | 18 | 107 |

With respect to typical component systems in Table 1, an immersion test was also carried out in sulfuric acid, nitric acid, sodium hypochlorite, phosphoric acid, and caustic soda at room temperature and as shown in Table 2, corrosion resistance performance was evaluated. In this case, the thickness of the amorphous ribbon used in the tests in Table 1 and Table 2 was 30 microns.

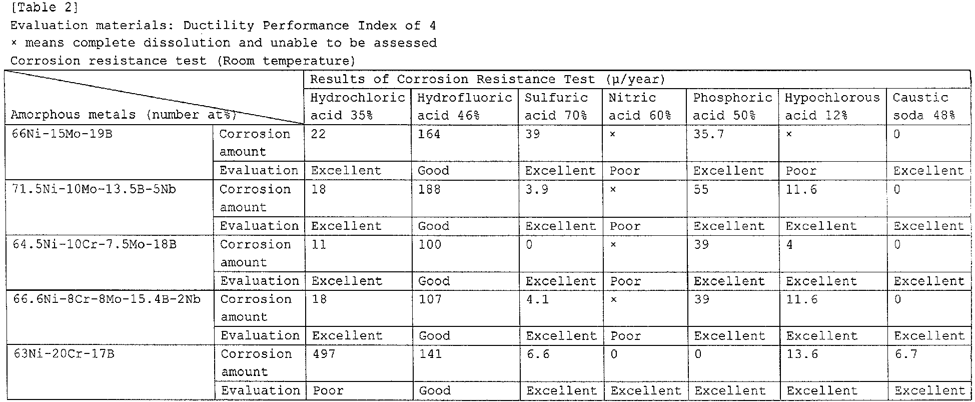

### [Confirmation of Ductility (1)]

With respect to each amorphous ribbon prepared as mentioned above, an adhesion bending (180 degrees) test was conducted and the ductility regarding each amorphous alloy was evaluated by the presence/absence of fracture of the ribbon. The results are shown in Table 1 above. The ductility performance index are indicated by 1 to 4 of the index based on the same criteria as mentioned earlier.

### [Confirmation of Ductility (2)/Confirmation of abrasion resistance]

An amorphous alloy coating of Ni-15Mo-19B with a good ductility (Ductility performance index: 4) and another amorphous alloy coating of Fe-35Cr-9Mo-8P-8C-8B with a poor ductility (Ductility performance index: 1) were formed on the surface of a substrate (iron material: SS41) with a thickness of 300 microns by thermal spraying. The coating was formed using a thermal spraying device (for example, disclosed in Japanese Unexamined Patent Application Publication No. 2010-22895), wherein a flame containing material particle powder was sprayed using a thermal spraying gun towards the substrate to melt the powder in the flame and to cool the powder and flame with a cooling gas before reaching the substrate. The powder for thermal spraying was produced by gas atomizing method and the alloy compositions were Ni-15Mo-19B and Ni-10Mo-5Nb-13.5B. This powder was used in the aforementioned device to form an amorphous coating on a transport roll for rolling, etc., having a range of thermal spraying of ϕ130 x 300L. In this case, the substrate temperature was maintained at 100 to 150°C during the thermal spraying and nitrogen pressure for cooling was 0.2 MPa. Further, an alloy powder of Fe-35Cr-9Mo-8P-8C-8B was thermally sprayed under the conditions of the same-shaped substrate and the same substrate retention temperature.
A cross-sectional photo of the coating formed is shown in Fig. 3. A difference between the two cases is obvious. The coating of the Ni-15Mo-19B (Fig. 3 (a)) demonstrates a clean surface without cracks and through-holes. It seems that a difference in the linear expansion between the substrate and the amorphous alloy is erased by ductility. In contrast, regarding the coating formation of the Fe-Cr-Mo series in Fig. 3 (b), the coating becomes amorphous, but numerous cracks are identified, suggested that the quality of the coating is poor. In the Fe-Cr-Mo series, in order to eliminate the occurrence of stress due to a difference in the liner expansion, generally a cushion alloy coating is formed between the amorphous alloy and the substrate.
With respect to an amorphous alloy coating of Ni-15Mo-19B, the hardness index HV showing abrasion resistance is 900, indicates sufficient abrasion resistance.

### [Confirmation of Delayed Fracture Resistance]

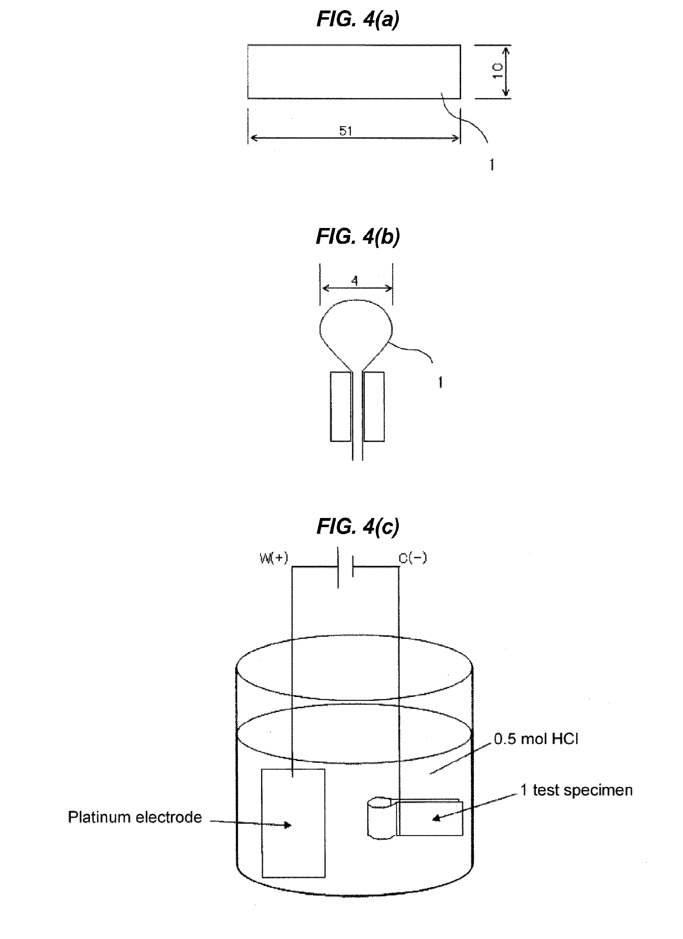

In the steel industry, P forms an oxide in the grain boundary and also forms impurities. Further, these and residual y absorbs hydrogen over time to expand the grain boundary to destroy the metallographic structure. For this reason, the inventors conducted a delayed fracture test of amorphous alloy by using a test method accelerating hydrogen embrittlement. The test method was disclosed in Japanese Unexamined Patent Application Publication No . H7-14 6225, but the following method was used here.
That is, the amorphous alloy (aforementioned ribbon, for example) was cut to obtain a test specimen 1 in the shape shown in Fig. 4 (a), this was bent with a bending diameter of 4 mm as shown in Fig. 4 (b), and then fixed with a tool. The test specimen 1, for example, in that state was immersed in a dilutedhydrochloric acid electrolyte solution as shown in Fig. 4 (c) to make the test specimen 1 to be a negative electrode and then electric current at a current density of about 320 A/m2 was passed. When delayed fracture occurred on the test specimen 1, a time from the beginning of electrolysis to this time point was measured.
The test was conducted with amorphous alloys of 70Fe-10Cr-13P-7C and 66Ni-15Mo-19B. The results are shown in Table 3. The alloy of 70Fe-10Cr-13P-7C containing P was fractured in 7 minutes, whereas 66Ni-15Mo-19B was fractured in 29 minutes, indicated that the tolerance was 4 times greater. Although the relationships between the delayed fracture time in this test and the service life in an actual machine are not clear, it is certain that the service life before the delayed fracture is longer.

**[Table 3]**

| Results of Delayed Fracture Test | | | | |
|---|---|---|---|---|
| Amorphous alloy composition (at%) | Current (mA) | Electrolyte solution | Liquid contact surface area (mm²) | Fracture time (min.) |
| 70Fe-10Cr-13P-7C | 200 | 0.5 mol HCl | 620 | 7 |
| 66Ni-15Mo-19B | 200 | 0.5 mol HCl | 620 | 29 |

### [Industrial Applicability]

The Ni-based amorphous alloy according to the present invention can be widely used as an industrial material requiring ductility, delayed fracture resistance, corrosion resistance and the like. For example, it can be also used as a surface coating of the pump shaft for carrying acids.

## Claims

1. A Ni-based amorphous alloy having high ductility, high corrosion resistance, and excellent delayed fracture resistance, wherein
the Ni-based amorphous alloy comprises 63 at% or more of Ni, and consists only of, as a semimetal for amorphization, other than P.

2. The Ni-based amorphous alloy according to claim 1, wherein the Ni-based amorphous alloy comprises 63 at% or more of Ni, comprises 10 at% or more and 25 at% or less of B, as a semimetal for amorphization, and comprises one or more elements selected from Cr, Mo, and Nb as remaining main elements.

3. The Ni-based amorphous alloy according to claim 2, wherein the Ni-based amorphous alloy has a high corrosion resistance to hydrochloric acid, sulfuric acid, hydrofluoric acid, phosphoric acid, and caustic soda under a reductive environment, and
has a composition expressed by Ni_{100-x-y}MoₓB_{y} wherein Ni is 66 at% or more, 5 at% ≤ x ≤ 21 at%, and 10 at% ≤ y ≤ 25 at%.

4. The Ni-based amorphous alloy according to claim 2, wherein
the Ni-based amorphous alloy has a high corrosion resistance to hydrochloric acid, sulfuric acid, hydrofluoric acid, sodium hypochlorite, phosphoric acid, and caustic soda under a reductive environment
and has a composition expressed by Ni_{100-x-y-z}MoₓNb_{y}B_{z} wherein Ni is 71.5 at% or more, 0.1 at% ≤ x ≤ 15 at%, 0.1 at% ≤ y ≤ 10 at%, and 10 at% ≤ z ≤ 20 at%.

5. The Ni-based amorphous alloy according to claim 2, wherein
the Ni-based amorphous alloy has a high corrosion resistance to hydrochloric acid, sulfuric acid, hydrofluoric acid, sodium hypochlorite, phosphoric acid, and caustic soda under a reductive environment
and has a composition expressed by Ni_{100-x-y-z}CrₓMo_{y}B_{z} where Ni is 64 at% or more, 10 at% ≤ x ≤ 25 at%, 0 at% ≤ y ≤ 10 at%, and 10 at% ≤ z ≤ 25 at%.

6. The Ni-based amorphous alloy according to claim 2, wherein
the Ni-based amorphous alloy has a high corrosion resistance to hydrochloric acid, sulfuric acid, hydrofluoric acid, sodium hypochlorite, phosphoric acid, and caustic soda under a reductive environment, and
has a composition expressed by Ni_{100-w-x-y-z}Cr_{w}MoₓNb_{y}B_{z} where Ni is 64 at% or more, 0.1 at% ≤ w ≤ 15 at%, 0.1 at% ≤ x ≤ 20 at%, 0.1 at% ≤ y ≤ 10 at%, and 10 at% ≤ z ≤ 25 at%.

7. The Ni-based amorphous alloy according to claim 2, wherein
the Ni-based amorphous alloy has a high corrosion resistance to nitric acid, sulfuric acid, sodium hypochlorite, phosphoric acid, and caustic soda under an oxidative environment
and has a composition expressed by Ni_{100-x-y}CrₓB_{y} where Ni is 63 at% or more, 20 at% ≤ x ≤ 30 at%, and 10 at% ≤ y ≤ 25 at%.
